# EUROPEAN PATENT APPLICATION

(11) **EP 1 542 474 A1**
(43) Date of publication of application: **15.06.2005**
(21) Application number: 04257615.7
(22) Date of filing: 08.12.2004
(51) Int. Cl.: H04N 7/50

(54) **Decoding device, electronic apparatus, computer, decoding method, program, and recording medium**

(30) Priority: 12.12.2003 JP 2003414232
(71) Applicant: SONY CORPORATION, Tokyo 141 (JP)
(72) Inventor: Shibata, Shojiro, Shinagawa-ku Tokyo (JP); Kobayashi, Mitsugu, Shinagawa-ku Tokyo (JP)
(74) Representative: Horner, David Richard

(57) **Abstract**

A decoding device for decoding an image stream containing bi-directionally predictive-coded image data includes "N" number of decoding units for decoding the image stream in a parallel manner, wherein "N" is a natural number greater than or equal to 2. Each of the decoding units decodes a partial image being assigned to the decoding unit out of "N" number of partial images forming a frame when the bi-directionally predictive-coded image data is input, and decodes an entire frame when image data coded by using a method other than the bi-directionally predictive-coding method is input.

## Description

### BACKGROUND OF THE INVENTION

### 1. Field of the Invention

The present invention relates to a decoding device for decoding an image stream containing predictive-coded image data between frames. The present invention also relates to an electronic apparatus including the decoding device. The present invention also relates to a computer for executing the function of the decoding device. The present invention also relates to a method and a program for decoding an image stream containing predictive-coded image data. Finally, the present invention relates to a recording medium for recording the program.

### 2. Description of the Related Art

Recently, a variety of image compression technologies has been proposed. For example, H.261 and MPEG (Motion Picture coding Experts Group) standards are proposed. Decoding image data encoded using such technologies require a large amount of computations.

Therefore, in general, a specialized hardware accelerator (LSI) is used in order to decode a high-resolution image, e.g., a high definition (HD) image. For example, such an LSI can process an HD signal of 1920-by-1080 pixels at a rate of 30 frames per second.

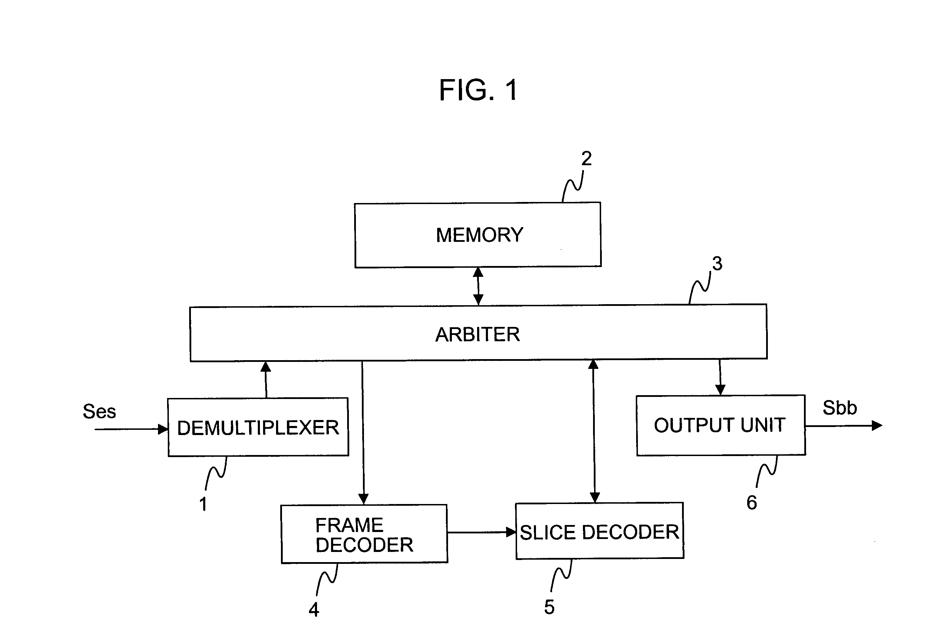

Fig. 1 is an example of a block diagram of a decoding unit (hereinafter also referred to as a decoder) that complies with an MPEG format. The decoding operation of the decoder will be described below.

A demultiplexer 1 acquires address information of various start codes from an elementary stream Ses.

The elementary stream Ses includes only video data. If one data stream is composed of audio data and video data, only the video data is input as the elementary stream Ses.

The start codes include, for example, a sequence start code, a GOP start code, a picture start code, and a slice start code. The sequence start code indicates a start position of the stream. The GOP start code indicates a start position of a group of pictures (GOP). The picture start code indicates a start position of a picture. The slice start code indicates a start position of a slice.

The demultiplexer 1 stores the elementary stream Ses along with these start codes in a memory 2. The storing process is carried out by an arbiter 3, which is a memory management module. A frame decoder 4 decodes a sequence layer, a GOP layer, and a picture layer based on the start codes acquired by the demultiplexer 1.

A slice decoder 5 is started based on this information. The slice decoder 5 decodes the slice layer. More specifically, the slice decoder 5 carries out variable length decoding, inverse quantizing, inverse scanning, and inverse discrete cosine transforming (inverse DCT).

Additionally, the slice decoder 5 loads a reference image for motion compensation from the memory 2 to decode a macro block in a predictive-picture frame and a bi-directionally predictive-picture frame.

The predictive-picture frame is also referred to as a "P frame". The bi-directionally predictive-picture frame is also referred to as a "B frame".

In general, the predictive-picture frame is predicted from a temporally previous frame. However, some predictive-picture frames are predicted from a temporally next frame.

After loading the reference image, the slice decoder 5 adds a decoded frame image to the reference image. The slice decoder 5 then writes the generated decoded image to the memory 2.

Upon completion of the decoding process for an entire screen, an output unit 6 reads out the decoded image from the memory 2 and outputs it as a baseband signal Sbb.

Japanese Unexamined Patent Application Publication No. 2000-307642 and Japanese Unexamined Patent Application Publication No. 2000-307533 disclose the above-described technologies.

In the above-described decoding process, both a bandwidth of the memory 2 and a processing time of the slice decoder 5 determine the performance of the process. In particular, accesses from all components of the decoding unit concentrate at the memory 2.

For example, the demultiplexer 1 writes the elementary stream Ses and analysis data, such as the start codes, to the memory 2. Also, the elementary stream Ses, for example, is loaded from the memory 2 to the frame decoder 4 and the slice decoder 5. Additionally, for example, to decode a P frame and a B frame, the reference image is loaded from the memory 2 to the slice decoder 5, which writes the decoded image into the memory 2. Furthermore, the decoded image is loaded from the memory 2 to the output unit 6.

Among these accesses, the most bandwidth consuming access of the memory 2 is an access from a process after the compressed data is decoded. That is, these accesses are access for loading the decoded image from the memory 2 to the output unit 6, access for loading the reference image from the memory 2 to the slice decoder 5, and access for writing decoded image from the slice decoder 5 to the memory 2.

Since the output unit 6 outputs the baseband signal Sbb using a synchronous output, such as a serial digital interface (SDI), a higher priority must be assigned to the access for loading a decoded image from the memory 2 to the output unit 6 compared to other accesses.

Thus, the limitation of the bandwidth of the memory 2 causes a waiting time of the slice decoder 5 while the slice decoder 5 loads the reference image. This waiting time determines the processing performance of the decoding unit. The slice decoder 5 requires a fixed processing time for pipeline processes of variable length decoding, inverse quantizing, inverse scanning, and inverse DCT. This fixed processing time also determines the processing performance of the decoding unit.

### SUMMARY OF THE INVENTION

Particular and preferred aspects of the present invention are set out in the accompanying independent and dependent claims.

Embodiments of the present invention provide a technology for decoding an image stream including inter-frame predictive-coded image data at high speed.

To solve the above-described technical problems, in embodiments of the present invention, a time-sensitive decoding process of inter-frame predictive-coded image data is divided into parallel sub-processes. According to one embodiment of the present invention, a decoding process of bi-directionally predictive-coded image data is divided into parallel sub-processes. According to another embodiment of the present invention, a decoding process of unidirectionally predictive-coded image data is divided into parallel sub-processes.

### (1) First aspect of the present invention

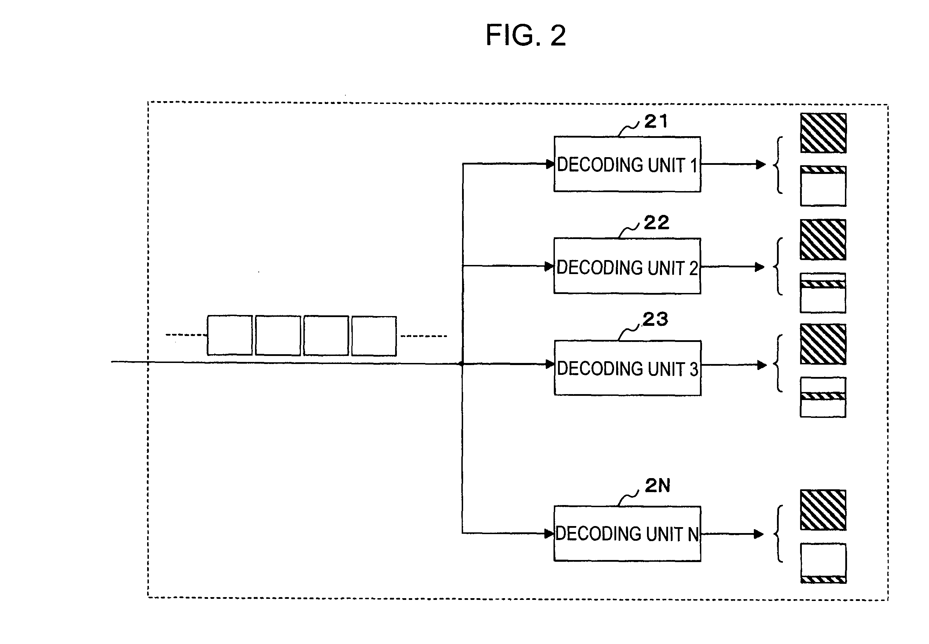

Fig. 2 is an example of a decoding device according to an embodiment of the present invention. Here, a process in which bi-directionally predictive-coded image data is decoded in a parallel manner will be described. That is, an image stream contains at least bi-directionally predictive-coded image data.

In addition to the bi-directionally predictive-coded image data, the image stream contains image data coded using another method other than a bi-directionally predictive coding method. For example, the image stream contains an intra-frame coded image data and predictive-coded image data. Hereinafter, the intra-frame predictive-coded image data is also referred to as an "I frame".

The image data coded using another method do not always contain the image data coded by these two methods. For example, some image streams contain two types of intra-frame coded image data and bi-directionally predictive-coded image data. Additionally, for example, some image streams contain three types of image data coded using all the three above-described methods.

Thus, an image stream is composed of a series of image data items coded with different types of coding methods. Each image data item corresponds to one frame. The frame contains a field image. In Fig. 2, image data corresponding to one frame is schematically shown as a square.

In a group of frames, which is a unit of access, the combination between the various types of frames may be freely determined. Here, the group of frames is defined as a series of frames between one intra-coded frame and next intra-coded frame. Additionally, the number of bi-directionally predictive-coded frames in the group of frames may be freely determined. In general, as the number of bi-directionally predictive-coded frames decreases, the image quality increases.

To decode such an image stream in a parallel manner, a decoding device 10 includes "N" number of decoding units 21 to 2N, where N is a natural number greater than or equal to 2. Each of the decoding units 21 to 2N changes a processing function in accordance with the type of image data. For example, when image data coded with different types of schemes other than the bi-directionally predictive-coding scheme is input, each decoding unit 2i (i = 1, 2 ... N) decodes an entire frame. In Fig. 2, this decoded section is shown as a square with hatching.

For example, when image data coded with the bi-directionally predictive-coding scheme is input, each decoding unit 2i (i = 1, 2 ... N) decodes only a partial image of a frame assigned to the decoding unit. The partial image is one of "N" number of partial images forming the frame. In Fig. 2, the partial images of a frame assigned to the decoding units are shown as sections with hatching.

The partial image may be either fixed or variable in length. In the case of an MPEG format, the partial image is, for example, a slice. The computational amount of each decoding unit 2i (i = 1, 2 ... N) basically depends on the amount of partial image data. Preferably, the computational amounts of the decoding units 2i (i = 1, 2 ... N) are substantially the same. In general, the computational amounts are slightly different.

If the computational amounts for the partial images are the same, the computational amount of each decoding unit 2i (i = 1, 2 ... N) is only one Nth of a computational amount required for the decoding unit to decode an entire frame.

As a result, a decoding time of the decoding device can be decreased. Additionally, each decoding unit requires much lower processing power compared to a decoding unit executing all required computations. This results in decrease in development cost and product cost compared to a use of one high-performance decoding unit.

A frame can be reproduced by combining "N" number of the decoded partial images together. For example, the decoding device combines "N" number of the decoded partial images inside the device. Alternatively, the decoding device may directly output "N" number of the decoded partial images to outside. In this case, "N" number of the decoded partial images are combined together outside the decoding device.

Additionally, decoding results of image data coded with a scheme other than the bi-directionally predictive-coding scheme may be output in the same manner as described above. That is, for image data of a frame decoded as one entire frame, each decoding unit 2i (i = 1, 2 ... N) may output a partial image assigned to each decoding unit 2i in the same manner as for the bi-directionally predictive-coded image data.

In this case, the same output scheme can be employed for image data coded with all the coding schemes. An output partial image of image data coded with a scheme other than the bi-directionally predictive-coding scheme preferably corresponds to an assigned partial image of image data coded with the bi-directionally predictive-coding scheme. In this case, a common output processing can be used.

Alternatively, when image data coded with a scheme other than the bi-directionally predictive-coding scheme is output, only one decoding result from a selected one of "N" number of the decoding unit may be output. In this case, only the selected decoding unit may execute the decoding process of the image data coded with a scheme other than the bi-directionally predictive-coding scheme and other (N-1) number of decoding units may stop decoding processes thereof.

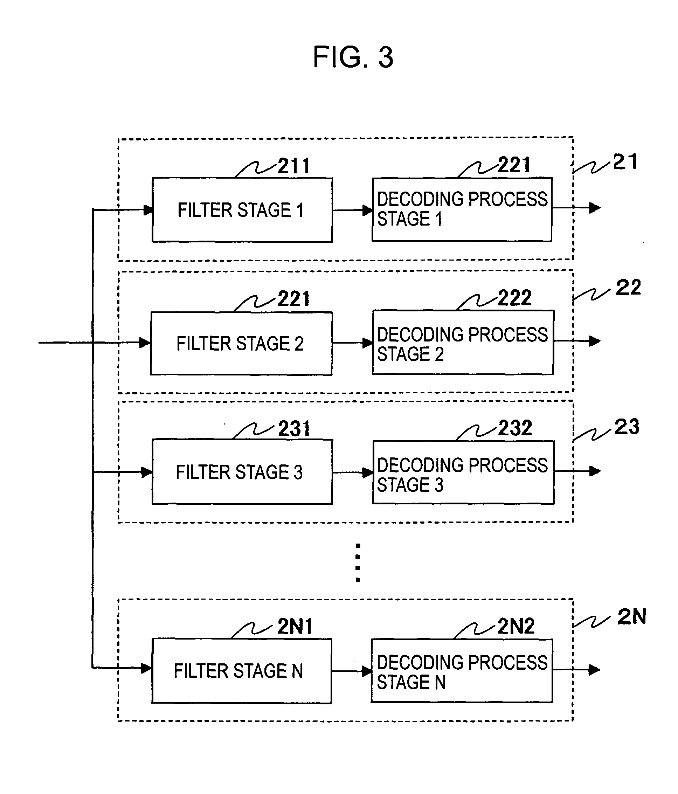

Each decoding unit 2i (i = 1, 2 ... N) can be composed of the configuration shown in Fig. 3. That is, each decoding unit 2i (i = 1, 2 ... N) can be composed of a filter stage 2i1 and a decoding process stage 2i2. Each filter stage 2i1 should have a characteristic that changes the pass range of image data in accordance with a type of coding scheme.

For example, upon receipt of bi-directionally predictive-coded image data, each filter stage 2i1 only passes a partial image assigned to the filter stage 2i1 out of "N" number of partial images that form a frame. In addition, upon receipt of image data coded with a scheme other than the bi-directionally predictive-coding scheme, each filter stage 2i1 directly passes all of the input image data.

On the other hand, the decoding process stage 2i2 is composed of a module that can decode image data input from the corresponding filter stage 2i1. This configuration allows the structures of decoding process stages to be the same.

### (2) Second aspect of the present invention

The decoding device shown in Fig. 2 can be used to parallelize a decoding process of unidirectionally predictive-coded image data. In this case, each decoding unit decodes intra-coded image data of one entire frame, whereas each decoding unit decodes only a partial image of unidirectionally predictive-coded image data assigned to the decoding unit.

### (3) Third aspect of the present invention

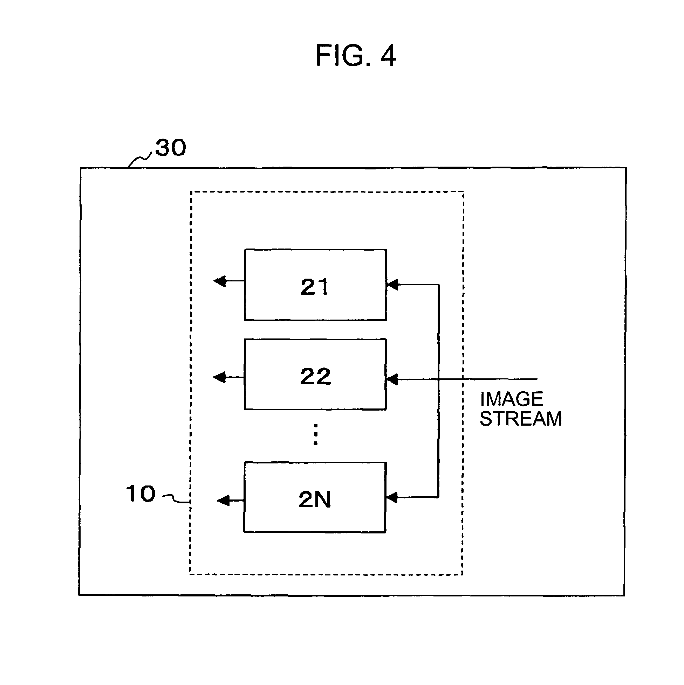

According to an embodiment of the present invention, an electronic apparatus is proposed in which the decoding device 10 is incorporated or is detachably mounted. Fig. 4 shows an example of such an electronic apparatus 30. The decoding device 10 is composed of, for example, a semiconductor integrated circuit, a module, a board, a card device, and another electronic circuit.

The electronic apparatus 30 includes, for example, an image editing device, a video player, a television receiver, a television signal decoder, a chip device, a card device, a cell phone, a mobile information terminal, a game machine, a video server, a computer, and various types of electronic apparatuses having a playback function of a compressed image.

Additionally, the electronic apparatus 30 may include a compressed function of an image data.

Furthermore, the electronic apparatus 30 may realize the decoding function not only by hardware but also by software.

The electronic apparatus 30 may include a communications function for receiving an image stream. The image stream may be received with a streaming method that requires decoding on the fly or with a download method that stores the image stream once in a recording medium.

The electronic apparatus 30 may include a function for receiving an image stream broadcasted for the general public.

Furthermore, the electronic apparatus 30 decodes an image stream played back from an externally connected recoding medium or a built-in recoding medium.

### (4) Fourth aspect of the present invention

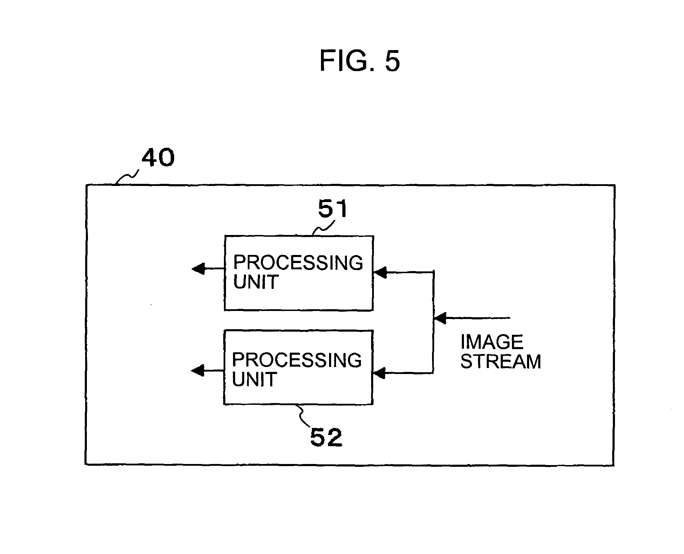

According to an embodiment of the present invention, a computer that realizes the function of the decoding device 10 is proposed. Fig. 5 shows an example of such a computer 40. The computer 40 includes a plurality of processing units (processors). That is, the computer 40 adopts a configuration known as a multi-processor configuration. As shown in Fig. 5, the computer 40 includes two processing units 51 and 52.

According to this embodiment of the present invention, application software functions as the above-described decoding unit. The processing units 51 and 52 correspond to the decoding units. Thus, the decoding process of an image stream may be distributed to a plurality of processing units (processors). This configuration decreases processing power required for each processing unit.

It should be noted that an operating system running on the computer 40 supports multi processors.

### (5) Other aspects of the present invention

The above-described aspects of the present invention can be achieved as a decoding method, a program, and a recording medium for recording the program. The program can be delivered via a transmission line.

As described above, according to embodiments of the present invention, a decoding process of image data that requires referencing another image during a decoding time is distributed. Thus, a computational amount required for each process can be significantly reduced. As a result, a time required for decoding image data that requires referencing another image during the decoding time can be decreased.

### BRIEF DESCRIPTION OF THE DRAWINGS

The present invention will be described further, by way of example only, with reference to preferred embodiments thereof as illustrated in the accompanying drawings, in which:
Fig. 1 is a block diagram illustrating a hardware configuration of an MPEG decoder;
Fig. 2 is a schematic diagram of an example of a decoding device;
Fig. 3 shows an example of the internal configuration of a decoding unit;
Fig. 4 shows an electronic apparatus including the decoding device;
Fig. 5 is a diagram illustrating a computer having a multi processor configuration according to an embodiment of the present invention;
Fig. 6 is a block diagram of a hardware configuration of an editing device composed of a computer;
Fig. 7 is a block diagram illustrating an internal configuration of the MPEG decoder;
Fig. 8 is a flow chart of the operation executed by a slice filter;
Fig. 9 is a schematic diagram illustrating decoding processes for different types of frames; and
Fig. 10 is a schematic diagram illustrating an output process of decoding results.

### DESCRIPTION OF THE PREFERRED EMBODIMENTS

Embodiments of an electronic apparatus having a built-in decoding unit will be described below with reference to an editing device for decoding an image stream that complies with MPEG format. For technologies not illustrated or not described in this specification, well-known technologies in the art can be used.

The hardware configuration of the editing device will be described below. In alternative embodiments of the present invention software equivalent to this hardware can be used. When embodiments of the present invention use such a computer program, the computer program may be recorded in a computer-readable recording medium.

The recording medium includes, for example, a magnetic recording medium, such as a magnetic disk (e.g., a flexible disk and a hard disk) and a magnetic tape; an optical recording medium, such as an optical disk, an optical tape, and a machine-readable bar code; a semiconductor recording device, such as a random access memory (RAM) and a read only memory (ROM); and other physical devices and media used for recording a computer program.

### (1) System configuration

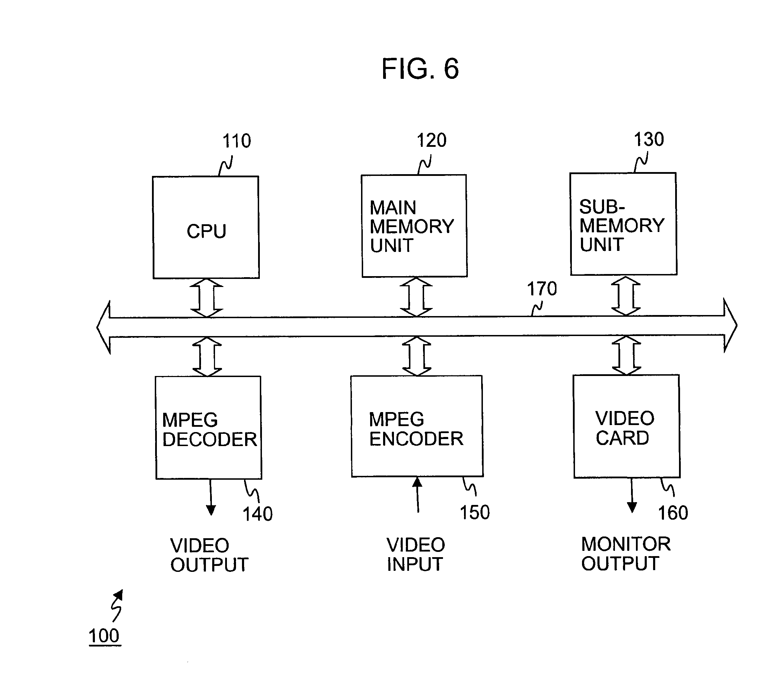

Fig. 6 shows a system configuration of an editing device 100. For example, the editing device 100 is achieved as a computer. Here, a GOP consists of 15 frames. In the 15 frames, three types of frames, that is, an I frame, a P frame, and a B frame are mixed. The I frame is an intra-coded frame. The P frame is a predictive-coded frame. The B frame is a bi-directionally predictive-coded frame.

The editing device 100 includes a central processing unit (CPU) 110, a main memory unit 120, a sub-memory unit 130, an MPEG decoder 140, an MPEG encoder 150, a video card 160, and a bus 170.

The CPU 110 is a processor for executing an operating system and various types of application programs. The function of the editing device is achieved by the operation of the CPU 110.

The main memory unit 120 provides a memory space capable of a high-speed access. For example, the main memory unit 120 includes a ROM and a RAM. The ROM is used for storing a basic input and output (I/O) program. The RAM is used for saving editing image data and for executing an application program.

The sub-memory unit 130 includes a mechanism for driving a storage medium, such as a hard disk. The hard disk stores, for example, an image stream to be decoded.

The MPEG decoder 140 is a module for decoding compressed image data.

When decoding a slice layer, the MPEG decoder 140 changes the decoding operation thereof in accordance with whether or not the slice data is a B frame. That is, upon receipt of a B frame, the MPEG decoder 140 divides the frame into "N" number of slice images (e.g., slice images for 16 lines) and decodes them in a parallel manner. On the other hand, upon receipt of an I frame or a P frame, each of "N" number of internal decoders in the MPEG decoder 140 decodes the one entire frame. The detailed operation will be described below.

By using this decoding scheme, the MPEG decoder 140 can process an HD signal having 1920-by-1080 pixels at a rate of more than 60 frames per second to display it on a monitor. Accordingly, the MPEG decoder 140 can output a video signal of the HD serial digital interface (HD-SDI) DualLink (SMPTE372M) standard from a video output terminal.

The MPEG encoder 150 can process an HD signal having 1920-by-1080 pixels at a rate of more than 60 frames per second. Accordingly, the MPEG encoder 150 can input a video signal of the HD-SDI DualLink (SMPTE372M) standard from a video input terminal.

The video card 160 has a monitor output terminal for a monitor display. For example, the video card 160 can display an HD signal having 1920-by-1080 pixels at a rate of more than 60 frames per second.

The bus 170 is a peripheral components interconnect (PCI) bus. For example, a PCI-Express bus, which is a bandwidth expanded version of the PCI bus, is used.

### (2) Configuration of MPEG decoder

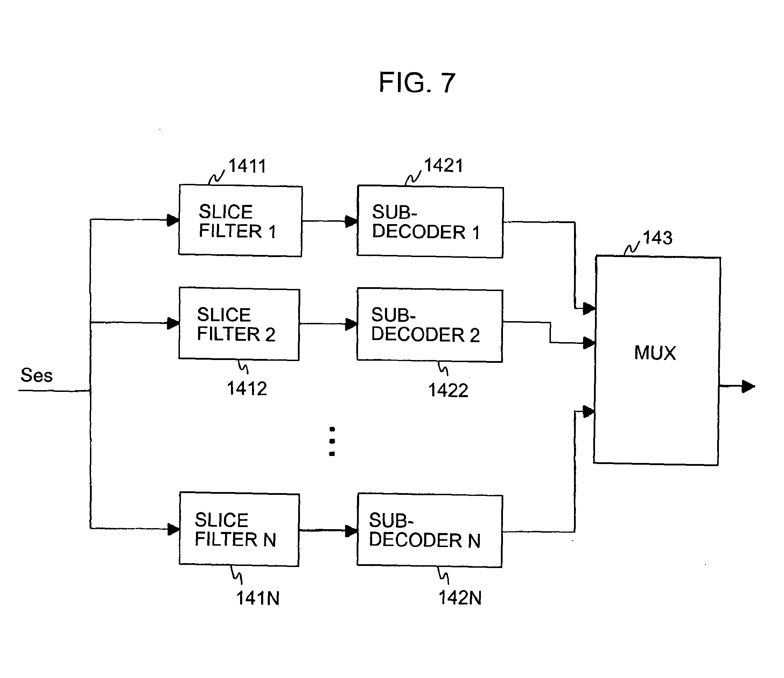

Fig. 7 shows an internal configuration of the MPEG decoder 140. The MPEG decoder 140 includes "N" number of slice filters 141i (i = 1, 2, ... N), "N" number of sub-decoders 142i (i = 1, 2, ... N), and a multiplexer 143. For example, the decoding unit shown in Fig. 1 is used for the sub-decoder 142.

Each of "N" number of the slice filter 141i (i = 1, 2, ... N) inputs an elementary stream Ses in a parallel manner. When image data is an I frame or a P frame, the slice filter 141 passes the image data without modification. However, when the image data is a B frame, the slice filter 141 filters the image data on a slice basis. A slice to be filtered is determined in advance for each filter.

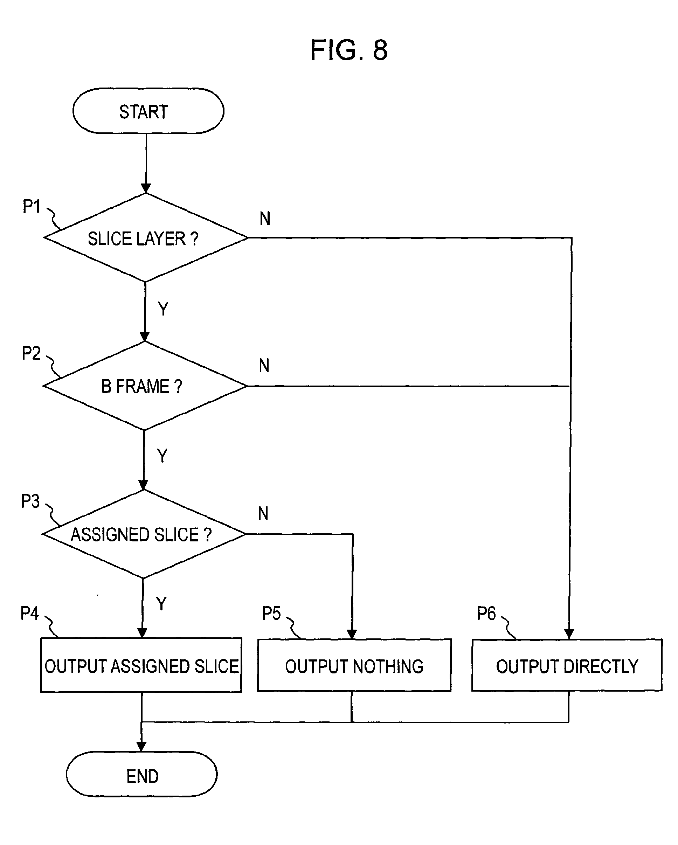

Fig. 8 shows the operational procedure of the slice filter 141. Upon receipt of an elementary stream Ses, the slice filter 141 determines whether or not the image data is a slice layer (process P1). If it is determined that the image data is one of a sequence layer, a GOP layer, and a picture layer, then the slice filter 141 determines that the answer is "NO" and directly outputs the input image data without modification (process P6).

If it is determined that the image data is a slice layer, then the slice filter 141 determines whether or not the input image data is a B frame (process P2). For this determination, the slice filter 141 uses a picture type of the slice layer stream. If it is determined that the picture type is an I frame or a P frame, then the slice filter 141 determines that the answer is "NO" and directly outputs the input image data without modification (process P6) .

If it is determined that the image data is a B frame, then the slice filter 141 determines whether a slice, which is one of "N" divided slices of the B frame, is one assigned to the slice filter 141 (process P3). If so, the slice filter 141 outputs image data of the assigned slice without modification (process P4). On the other hand, the slice filter 141 does not pass a slice not assigned to the slice filter 141 (process P5).

Each of "N" number of the sub-decoder 142i (i = 1, 2, ... N) has a configuration of the decoding unit shown in Fig. 1. Each sub-decoder 142 decodes input image data. Accordingly, the sub-decoder 142 processes a sequence layer, a GOP layer, and a picture layer in the same manner as described above. For an I frame and a P frame, the sub-decoder 142 decodes the one entire frame. For a B frame, the sub-decoder 142 decodes only the filtered slice.

It is noted that the sub-decoder 142 outputs only decoded image data corresponding to a section of a B frame assigned to the sub-decoder 142. That is, although an entire frame of I frame or P frame is decoded, the sub-decoder 142 outputs only a slice of the I frame or P frame corresponding to the slice of the B frame assigned to the sub-decoder 142. Since only a slice is decoded for the B frame, the decoded result, of course, is the same as the output data.

The multiplexer 143 combines slices input from "N" number of sub-decoders 142 to reconstruct image data corresponding to an entire frame. This output operation is carried out for an I frame and a P frame in the same manner as for a B frame.

### (3) Detail of decoding process

The editing device 100 inputs image data between two editing points, which are specified via a graphic user interface (GUI), and then delivers the image data to the MPEG decoder 140 via the bus 170.

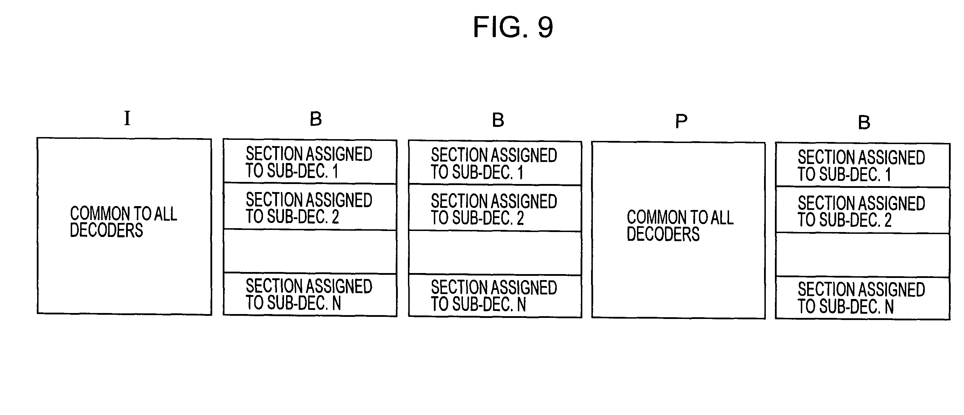

Fig. 9 is a schematic diagram of the decoding operation of the MPEG decoder 140. In Fig. 9, part of an MPEG stream is illustrated. In the case of an I frame, each of the sub-decoders 142i (i = 1, 2, ... N) in the MPEG decoder 140 decodes the entire I frame.

On the other hand, in the case of a B frame, one frame is divided into "N" number of slices. A sub-decoder 1421 decodes only a slice 1, which is assigned to the sub-decoder 1421. A sub-decoder 1422 decodes only a slice 2, which is assigned to the sub-decoder 1422. In the same manner, a sub-decoder 142N decodes only a slice N, which is assigned to the sub-decoder 142N.

Each slice is one Nth of the frame. Thus, a computational amount required for the sub-decoder 142i (i = 1, 2, ... N) decreases to about one Nth of that required for decoding an entire B frame.

A time required for the MPEG decoder 140 to decode a B frame is the maximum time among the computing times of the sub-decoders 142.

Consequently, a decoding time required for the MPEG decoder 140 significantly decreases compared to the time required in the case where one sub-decoder 142 decodes the entire area of the B frame.

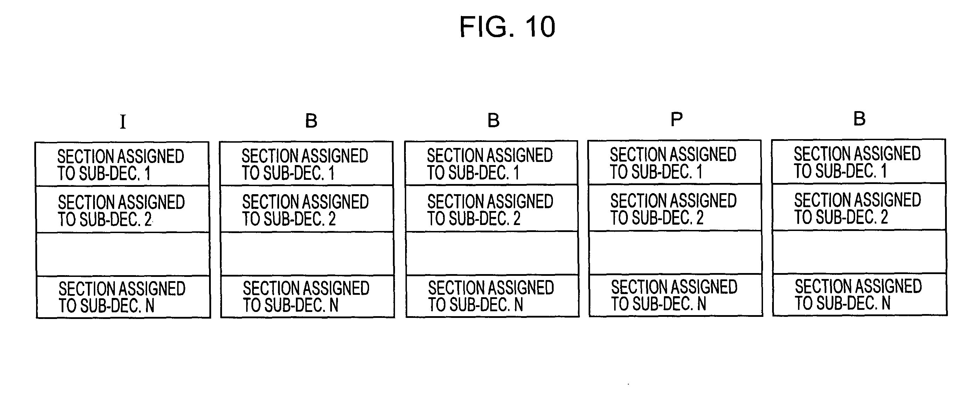

Fig. 10 is a schematic diagram of the output operation of a decoded result by the MPEG decoder 140. As shown in Fig. 10, each of the sub-decoders 142 outputs a decoded result of a slice corresponding to that for a B frame regardless of a type of a frame. The multiplexer 143 multiplexes them and outputs them as a frame image.

The decoded result is output from the video output terminal to, for example, a switcher. Also, the decoded result is provided to the video card 160 via the bus 170 and is displayed on a monitor. Additionally, an editing result from, for example, an AB roll process, a fade process, a special effect process, and other editing processes is encoded by the MPEG encoder 150 and is stored in the sub-memory unit 130. Furthermore, if required, the image data after encoding is output to outside the device.

### (4) Effect of embodiment

As described above, the decoding process of a B frame that requires a huge amount of computation is carried out by parallel processes of "N" number of the sub-decoders 142, each of which requires only one Nth of the amount of computation. As a result, a decoding time of the MPEG decoder 140 is significantly reduced.

Furthermore, since each of the sub-decoders 142 outputs a slice corresponding to the decoded slice of a B frame, the sub-decoder 142 carries out the same operations regardless of the type of a frame to be decoded. That is, the sub-decoder 142 needs not to determine the type of a frame at output time. This configuration can simplify the output process.

### (5) Other embodiments

While a stored system is described in the above-described embodiments, the present invention can also be applied to a broadcasting system. That is, an embodiment of the present invention can be applied to a decoding unit that decodes an MPEG stream received over the radio or a network. For example, one embodiment of the present invention can be applied to a cell phone and a mobile information terminal including a receiver of a television signal. Also, embodiments of the present invention can be applied to various types of electronic apparatuses including a receiver of an MPEG stream.

While "N" number of slices of only a B frame are processed in a parallel manner in the above-described embodiments, "N" number of slices of both P frame and B frame may be processed in a parallel manner.

In addition, while an MPEG stream is processed in the above-described embodiments, a stream including at least one of bi-directionally predictive-coded image data and predictive-coded image data can be processed.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A decoding device for decoding an image stream containing bi-directionally predictive-coded image data, the decoding device comprising "N" number of decoding units for decoding the image stream in a parallel manner,
wherein "N" is a natural number greater than or equal to 2, each of the decoding units decodes a partial image being assigned to the decoding unit out of "N" number of partial images forming a frame when the bi-directionally predictive-coded image data is input, and each of the decoding units decodes an entire frame when image data coded by using a method other than the bi-directionally predictive-coding method is input.

2. The decoding device according to Claim 1, wherein each of the decoding units comprises a filter stage and a decoding process stage disposed downstream of the filter stage, the filter stage passes a partial image being assigned to the decoding unit out of "N" number of partial images forming a frame when bi-directionally predictive-coded image data is input, the filter stage directly passes input image data when image data coded by using a method other than the bi-directionally predictive-coding method is input, and the decoding process stage decodes the image data input from the filter stage.

3. The decoding device according to Claim 1, wherein the decoding device combines "N" number of partial images decoded by the decoding units into an entire frame and outputs the entire frame as a decoding result.

4. A decoding device for decoding an image stream containing unidirectionally predictive-coded image data and intra-frame coded image data, the decoding device comprising "N" number of decoding units for decoding the image stream in a parallel manner,
wherein "N" is a natural number greater than or equal to 2, each of the decoding units decodes a partial image being assigned to the decoding unit out of "N" number of partial images forming a frame when the unidirectionally predictive-coded image data is input, and each of the decoding units decodes an entire frame when the intra-frame coded image data is input.

5. An electronic apparatus for decoding an image stream containing bi-directionally predictive-coded image data, the electronic apparatus comprising "N" number of decoding units for inputting the image stream in a parallel manner,
wherein "N" is a natural number greater than or equal to 2, each of the decoding units decodes a partial image being assigned to the decoding unit out of "N" number of partial images forming a frame when the bi-directionally predictive-coded image data is input, and each of the decoding units decodes an entire frame when image data coded by using a method other than the bi-directionally predictive-coding method is input.

6. An electronic apparatus for decoding an image stream containing unidirectionally predictive-coded image data and intra-frame coded image data, the electronic apparatus comprising "N" number of decoding units for inputting the image stream in a parallel manner,
wherein "N" is a natural number greater than or equal to 2, each of the decoding units decodes a partial image being assigned to the decoding unit out of "N" number of partial images forming a frame when the unidirectionally predictive-coded image data is input, and each of the decoding devices decodes an entire frame when the intra-frame coded image data is input.

7. A computer for decoding an image stream containing bi-directionally predictive-coded image data, the computer comprising "N" number of processing units for decoding the image stream in a parallel manner,
wherein "N" is a natural number greater than or equal to 2, each of the processing units decodes a partial image being assigned to the processing unit out of "N" number of partial images forming a frame when the bi-directionally predictive-coded image data is input, and each of the processing units decodes an entire frame when image data coded by using a method other than the bi-directionally predictive-coding method is input.

8. A computer for decoding an image stream containing unidirectionally predictive-coded image data and intra-frame coded image data, the computer comprising "N" number of processing units for decoding the image stream in a parallel manner,
wherein "N" is a natural number greater than or equal to 2, each of the processing units decodes a partial image being assigned to the processing unit out of "N" number of partial images forming a frame when the unidirectionally predictive-coded image data is input, and each of the processing units decodes an entire frame when the intra-frame coded image data is input.

9. A method for decoding an image stream containing bi-directionally predictive-coded image data, the method comprising the steps of:
inputting the image stream to "N" number of processing units in a parallel manner where "N" is a natural number greater than or equal to 2; and
decoding, by each of the processing units, a partial image being assigned to the processing unit out of "N" number of partial images forming a frame when the bi-directionally predictive-coded image data is input, and an entire frame when image data coded by using a method other than the bi-directionally predictive-coding method is input.

10. A method for decoding an image stream containing unidirectionally predictive-coded image data and intra-frame coded image data, the method comprising the steps of:
inputting the image stream to "N" number of processing units in a parallel manner where "N" is a natural number greater than or equal to 2; and
decoding, by each of the processing units, a partial image being assigned to the processing unit out of "N" number of partial images forming a frame when the unidirectionally predictive-coded image data is input, and an entire frame when the intra-frame coded image data is input.

11. A program comprising program code for causing a computer to execute the steps of:
inputting an image stream containing bi-directionally predictive-coded image data to "N" number of processing units where "N" is a natural number greater than or equal to 2; and
decoding, by each of the processing units, a partial image being assigned to the processing unit out of "N" number of partial images forming a frame when the bi-directionally predictive-coded image data is input, and an entire frame when image data coded by using a method other than the bi-directionally predictive-coding method is input.

12. A program comprising program code for causing a computer to execute the steps of:
inputting an image stream containing unidirectionally predictive-coded image data and intra-frame coded image data to "N" number of processing units where "N" is a natural number greater than or equal to 2; and
decoding, by each of the processing units, a partial image being assigned to the processing unit out of "N" number of partial images forming a frame when the unidirectionally predictive-coded image data is input, and an entire frame when the intra-frame coded image data is input.

13. A recording, medium storing a program for causing a computer to execute the steps of:
inputting an image stream containing bi-directionally predictive-coded image data to "N" number of processing units where "N" is a natural number greater than or equal to 2; and
decoding, by each of the processing units, a partial image being assigned to the processing unit out of "N" number of partial images forming a frame when the bi-directionally predictive-coded image data is input, and an entire frame when image data coded by using a method other than the bi-directionally predictive-coding method is input.

14. A recording medium storing a program for causing a computer to execute the steps of:
inputting an image stream containing unidirectionally predictive-coded image data and intra-frame coded image data to "N" number of processing units where "N" is a natural number greater than or equal to 2; and
decoding, by each of the processing units, a partial image being assigned to the processing unit out of "N" number of partial images forming a frame when the unidirectionally predictive-coded image data is input, and an entire frame when the intra-frame coded image data is input.
